# EUROPEAN PATENT SPECIFICATION

(11) **EP 4 476 951 B1**
(45) Date of publication and mention of the grant of the patent: **15.07.2026**
(21) Application number: 23753197.5
(22) Date of filing: 10.02.2023
(51) Int. Cl.: H04W 24/10, H04L 1/1867, H04W 24/08, H04W 72/0446, H04W 36/00

(54) **METHOD AND APPARATUS FOR HANDLING PRECONFIGURED GAPS IN A WIRELESS COMMUNICATION SYSTEM**
VERFAHREN UND VORRICHTUNG ZUR HANDHABUNG VORKONFIGURIERTER LÜCKEN IN EINEM DRAHTLOSEN KOMMUNIKATIONSSYSTEM
PROCÉDÉ ET APPAREIL POUR GÉRER DES INTERVALLES PRÉCONFIGURÉS DANS UN SYSTÈME DE COMMUNICATION SANS FIL

(30) Priority: 11.02.2022 IN 202241007401; 25.01.2023 IN 202241007401
(43) Date of publication of application: 18.12.2024
(73) Proprietor: SAMSUNG ELECTRONICS CO., LTD., Yeongtong-gu Suwon-si, Gyeonggi-do 16677 (KR)
(72) Inventor: ABRAHAM, Aby Kanneath, Bangalore Karnataka 560037 (IN); LEE, Taeseop, Suwon-si, Gyeonggi-do 16677 (KR); HWANG, June, Suwon-si, Gyeonggi-do 16677 (KR)
(74) Representative: Nederlandsch Octrooibureau
(86) International application number: PCT/KR2023/001960
(87) International publication number: WO 2023/153850

(56) References cited:
- WO-A1-2020/122617
- US-A1- 2011 116 364
- US-A1- 2022 014 955
- INTERDIGITAL, INC.: "Latency improvements for both DL and DL+UL positioning methods", 3GPP DRAFT; R1-2111800, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20211111 - 20211119, 6 November 2021 (2021-11-06), Mobile Competence Centre ; 650, route des Lucioles ; F-06921 Sophia-Antipolis Cedex ; France, XP052075073
- LG ELECTRONICS INC.: "SMTC and measurement gap enhancements", 3GPP DRAFT; R2-2110384, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20211101 - 20211112, 22 October 2021 (2021-10-22), Mobile Competence Centre ; 650, route des Lucioles ; F-06921 Sophia-Antipolis Cedex ; France, XP052066825
- SAMSUNG: "Preconfigured measurement gap patterns", 3GPP DRAFT; R2-2200497, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20220117 - 20220125, 11 January 2022 (2022-01-11), Mobile Competence Centre ; 650, route des Lucioles ; F-06921 Sophia-Antipolis Cedex ; France, XP052093659

## Description

### Technical Field

The present disclosure relates to wireless communication, and more particularly, to a method and a user equipment (UE) for handling preconfigured gaps in a new radio (NR).

### Background Art

Fifth generation (5G) mobile communication technologies define broad frequency bands such that high transmission rates and new services are possible, and can be implemented not only in "sub 6 gigahertz (GHz)" bands, such as 3.5GHz, but also in "above 6GHz" bands, referred to as millimeter wave (mmWave) including 28GHz and 39GHz. In addition, implementing sixth generation (6G) mobile communication technologies (referred to as "beyond 5G systems") in terahertz (THz) bands (for example, 95GHz to 3THz bands) in order to accomplish transmission rates fifty times faster than 5G mobile communication technologies and ultra-low latencies one-tenth of 5G mobile communication technologies are being considered.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), the following standardization technologies are being developed: beamforming and massive multiple input multiple output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods such as a low density parity check (LDPC) code for large amounts of data transmission and a polar code for highly reliable transmission of control information, layer 2 (L2) pre-processing, and network slicing for providing a dedicated network specialized to a specific service.

Improvement and performance enhancement of initial 5G mobile communication technologies in view of services to be supported by 5G mobile communication technologies is preferred. In addition, physical layer standardization for technologies such as vehicle to everything (V2X) technologies for aiding driving determination by autonomous vehicles based on information regarding positions and states of vehicles transmitted by the vehicles and for enhancing user convenience, NR-unlicensed (NR-U) technologies aimed at system operations conforming to various regulation-related requirements in unlicensed bands, NR UE power saving technologies, non-terrestrial network (NTN) technologies, which is UE-satellite direct communication for providing coverage in an area in which communication with terrestrial networks is unavailable, and positioning technologies are also desired.

Moreover, there has been ongoing standardization in air interface architecture/protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service regarding a 5G baseline architecture (for example, a service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been increasing exponentially will be connected to communication networks, and it is accordingly expected that enhanced functions and performances of 5G mobile communication systems and integrated operations of connected devices will be necessary. As such, new research is scheduled in connection with extended reality (XR) for efficiently supporting augmented reality (AR), virtual reality (VR), and mixed reality (MR). 5G performance improvement and complexity reduction by utilizing artificial intelligence (AI) and machine learning (ML), AI service support, metaverse service support, and drone communication are also being explored.

Furthermore, such developments of 5G mobile communication systems will serve as a basis for developing not only new waveforms for providing coverage in THz bands of 6G mobile communication technologies, multi-antenna transmission technologies such as full dimensional MIMO (FD-MIMO), array antennas and large-scale antennas, metamaterial-based lenses and antennas for improving coverage of THz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources. Patent document WO 2020/122617 A1, published on 18 June 2020, discloses a UE which receives configuration information regarding a measurement gap (MG) and transmits a MG skip indication associated with the MG; and transmits uplink signals during the MG.

### Disclosure of Invention

### Solution to Problem

The present disclosure has been made to address the above-mentioned problems and disadvantages, and to provide at least the advantages described below.

According to an aspect of the present disclosure, a method performed by a UE in a wireless communication system is provided. The method includes receiving, from a base station, a radio resource control, RRC, message including first information configuring at least one measurement gap and second information indicating whether the UE is configured to transmit a request for activation or deactivation of a pre-configured measurement gap through an uplink, UL, medium access control, MAC, control element, CE; triggering a first request for activation or deactivation of a first pre-configured measurement gap through the UL MAC CE based on the first information and the second information; identifying an occurrence of at least one event associated with the first pre-configured measurement gap, wherein the at least one event comprises reception of a downlink, DL, command for activation or deactivation of the first pre-configured measurement gap from the base station; cancelling the triggered first request for the activation or deactivation of the first pre-configured measurement gap based on the occurrence of the at least one event; and triggering a second request for activation or deactivation of a second pre-configured measurement gap.

According to another aspect of the present disclosure, a UE in a wireless communication system is provided. The UE includes at least one transceiver; at least one processor communicatively coupled to the at least one transceiver; and at least one memory, communicatively coupled to the at least one processor, storing instructions executed by the at least one processor individually or in any combination to cause the UE to: receive, from a base station, a radio resource control, RRC, message including first information configuring at least one measurement gap and second information indicating whether the UE is configured to transmit a request for activation or deactivation of a pre-configured measurement gap through an uplink, UL, medium access control, MAC, control element, CE, trigger a first request for activation or deactivation of a first pre-configured measurement gap through the UL MAC CE based on the first information and the second information, identify an occurrence of at least one event associated with the first pre-configured measurement gap, wherein the at least one event comprises reception of a downlink, DL, command for activation or deactivation of the first pre-configured measurement gap from the base station, cancel the triggered first request for the activation or deactivation of the first pre-configured measurement gap based on the occurrence of the at least one event, and trigger a second request for activation or deactivation of a second pre-configured measurement gap.

The invention is defined in the appended claims.

### Brief Description of Drawings

The above and other aspects, features, and advantages of certain embodiments of the present disclosure will be more apparent from the following description, taken in conjunction with the accompanying drawings, in which:
FIG. 1 is a block diagram of a UE for handling preconfigured gaps in NR, according to an embodiment;
FIG. 2A is a flow chart illustrating a method for handling the preconfigured gaps in the NR by the UE, according to an embodiment;
FIG. 2B is a flow chart illustrating a method for cancellation of a gap activation request, according to an embodiment;
FIG. 3 is a signalling diagram illustrating a scenario of handling an expiry of a retransmission timer by the UE, according to an embodiment;
FIG. 4 is a signalling diagram illustrating a scenario of gap activation based on the retransmission timer, according to an embodiment; and
FIG. 5 is a signalling diagram illustrating a request for the gap activation by the UE upon determining a specific scenario, according to an embodiment;
FIG. 6 is a block diagram illustrating a structure of a UE, according to an embodiment; and
FIG. 7 is a block diagram illustrating a structure of a base station, according to an embodiment.

### Best Mode for Carrying out the Invention

Various embodiments of the present disclosure are described with reference to the accompanying drawings. However, various embodiments of the present disclosure are not limited to particular embodiments, and it should be understood that modifications, equivalents, and/or alternatives of the embodiments described herein can be variously made. With regard to description of drawings, similar components may be marked by similar reference numerals.

In wireless technologies like NR and long-term evolution (LTE), a radio resource control (RRC) connected UE performs various measurements for a radio resource management (RRM) purposes, positioning, etc. For the RRM, the UE measures reference signals such as, for example, a synchronisation signal block (SSB), a channel state information reference signal (CSI-RS), etc., and reports it to the network.

Measurements to be performed by the UE for connected mode mobility may be classified in at least four measurement types:
- Intra-frequency NR measurements;
- Inter-frequency NR measurements;
- Inter-RAT measurements for evolved universal terrestrial radio access (E-UTRA); and
- Inter-RAT measurements for universal terrestrial radio access (UTRA).

For each measurement type, one or several measurement objects can be defined (i.e., the measurement object defines a carrier frequency to be monitored). For each measurement object, one or several reporting configurations can be defined (i.e., the reporting configuration defines reporting criteria). The reporting criteria can be, for example, event triggered reporting, periodic reporting and event triggered periodic reporting. The association between a measurement object and the reporting configuration may be created by a measurement identity (i.e., the measurement identity links together one measurement object and one reporting configuration of the same RAT). The measurements identity may also be used for reporting results of the measurements.

For positioning, the UE may report SSB/CSI-RS measurements and measurements based on additional reference signals like a positioning reference signal (PRS). The downlink (DL) PRS (DL PRS) is defined to facilitate support of different positioning methods such as DL time difference of arrival, (DL-TDOA), DL angle-of-departure multi round trip time (DL-AoD multi-RTT) through DL reference signal time difference (DL RSTD) of UE measurements, DL PRS- reference signal received power (DL PRS-RSRP), and respective UE reception (Rx)-transmission (Tx) time difference.

Measurement gaps may be defined as occasions when the UE needs to measure inter frequency NR or inter-RAT measurements or intra frequency measurements outside the active DL BWP when SSB is not completely contained in the active DL BWP. In addition, when the UE needs to measure PRS, the UE may use measurement gaps. Measurement gaps are configured by the network (for example, gNB in NR) and there may not be any transmission or reception during the gap period. Measurement gap configuration includes a gap offset, a gap length, and a repetition period and measurement gap timing advance. Gap offset specifies the sub-frame where the measurement gap occurs. Gap length gives the duration of the gap while the repetition period defines how often the measurement gap can occur.

Third Generation Partnership Project (3GPP) has defined a number of measurement gap patterns. Each gap pattern corresponds to a gap length and a gap repetition period. For example, in NR Release 16, there are 26 gap patterns that are defined. Measurement gap timing advance (mgta) specifies a timing advance value in milliseconds (ms). Gap occurs mgta milliseconds before the subframe given by the measurement gap offset.

In Release 16 of the 3GPP, the UE may be configured with only one measurement gap. Measurement gap, once configured may be activated until it is released.

In NR specifications, the UE which needs measurement gaps for positioning may use the location measurement indication procedure by sending the RRC location measurement indication message to the serving gNB. The message indicates that the UE is going to start location measurements, or that the UE is going to acquire subframe and slot timing of the target evolved universal terrestrial radio access (E-UTRA) system, and includes information required for the gNB to configure the appropriate measurement gaps. When the gNB has configured the required measurement gaps, the UE performs the location measurements or timing acquisition procedures. An RRC location measurement indication message can also indicate that the UE does not need to perform location measurements anymore.

For Release 17 NR, 3GPP may enhance the measurement gaps by introducing support of multiple gaps and support of preconfigured gaps. Preconfigured gaps are configured by RRC signalling and can be activated or deactivated dynamically either through RRC signalling or L2 MAC signalling, or based on predefined actions. For example, NR Release 17 considers MAC based activation/deactivation of preconfigured gaps for enhanced positioning gaps. Based on the information from location management function (LMF) or from the UE, a gNB may configure one or more preconfigured gaps. Each of the preconfigured gaps will be associated to a gap identification (ID). An LMF or UE can request for the activation or deactivation of preconfigured gaps.

The UE also may request the gNB to activate or deactivate the gaps by sending UL MAC CE.

Sending of a UL MAC CE is started when the UE triggers the transmission of MAC CE. Actual transmission of the MAC CE may happen at a later point in the time domain. This could be due to various reasons, for example, the UE needs UL resources to transmit the UL MAC CE and needs to receive the same from the network. For receiving the UL resources, UE may first need to send a request such as a scheduling request (SR) to the network. The network may take some time to process the SR and allocate the resources. Resource allocation may be further delayed if there are other higher priority UEs or if the cell is congested. Additionally, in many occasions, UE may not be configured with resources for sending the scheduling request. In such cases, UE may trigger a random access procedure to request for the resources to be sent SR. In short, the trigger of UL MAC CE and actual transmission of MAC CE can be two different events separated in the time domain.

Activation or deactivation of preconfigured gaps may be requested by the upper layers of the UE to the access stratum (AS) layers of the UE such as RRC or MAC. For the preconfigured positioning measurement gaps, the upper layers include layers such as LTE positioning protocol (LPP) in 3GPP NR architecture.

Activation or deactivation of preconfigured gaps may be requested by the RRC layer of the UE to the MAC layer of the UE. The RRC layer is an upper layer to MAC layer in the UE AS protocol stack in NR technology.

The NR Release 17 also introduces additional gap enhancements for other purposes like, for example, for multiple subscriber identiy module (multiSIM) operations. A UE may request the gaps required for multiSIM operations in RRC signalling like UE assistance information, and the gNB will configure the UE with requested gaps.

Some of the complexities with respect to the activation or deactivation of preconfigured gaps may include:
1. There is a need for a method to cancel the activation or deactivation request of a preconfigured gap after it is triggered in the MAC layer, but not yet successfully transmitted over the air.
2. If the UE requests activation of measurement gaps by sending UL MAC CE and doesn't receive any response from the gNB due to, for example, the request being lost in the air interface, the UE will not be able to perform required measurements.
3. If the UE requests deactivation of measurement gaps by sending UL MAC CE and doesn't receive any response from the gNB due to, for example, the request being lost in the air interface, the gaps will remain unnecessarily activated.
4. There can be multiple methods to activate or deactivate the gaps (MAC, RRC, by UE, LMF, etc..) and there is a need to synchronize the same.

Thus, addressing the above complexities would improve wireless communication systems.

An object of the embodiments herein is to provide a method and a UE for handling preconfigured gaps in a NR which includes performing cancelling of gap activation or gap deactivation requests triggered by the UE based on cancellation events. Therefore, the proposed method addresses existing issues such as the UE not being able to perform required measurements due to the UE not receiving any response from gNB for requests from the UE for activation of measurement or preconfigured gaps remaining unnecessarily activated even though the UE has requested for deactivation of the preconfigured gaps.

Another object of the embodiments herein is to provide a method to cancel the activation request or the deactivation request for preconfigured gap after the activation request or the deactivation request is triggered in the MAC layer, but not yet successfully transmitted over air to the gNB.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive "or", unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

Embodiments may be described and illustrated in terms of blocks which carry out a described function or functions. These blocks, which may be referred to as units or modules, are physically implemented by analog or digital circuits such as logic gates, integrated circuits, microprocessors, microcontrollers, memory circuits, passive electronic components, active electronic components, optical components, or hardwired circuits, and may optionally be driven by firmware. The circuits may be embodied in one or more semiconductor chips, or on substrate supports such as PCBs. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block may be physically separated into two or more interacting and discrete blocks without departing from the scope of the embodiments. Likewise, the blocks of the embodiments may be physically combined into more complex blocks without departing from the scope.

The accompanying drawings are used to help easily understand various technical features and the embodiments presented herein are understood not to be limited by the accompanying drawings. As such, the present disclosure should be construed to extend to any alterations, equivalents and substitutes in addition to those which are particularly set out in the accompanying drawings. Although the terms first, second, etc. may be used herein to describe various elements, these elements should not be limited by these terms. These terms are generally used to distinguish one element from another.

Accordingly, embodiments herein disclose a method for handling preconfigured gaps in an NR UE. The method includes triggering, by the UE, an UL MAC CE for transmission of a request for performing at least one of a gap activation and a gap deactivation to a gNB and determining, by the UE, that the UL MAC CE requesting performing at least one of the gap activation and the gap deactivation is not transmitted to the gNB. The UE is configured with at least one pre-configured measurement gap by the gNB. The method includes determining, by the UE, an occurrence of at least one cancellation event associated with the at least one preconfigured measurement gap and cancelling, by the UE, the request for performing at least one of the gap activation and the gap deactivation, in response to determining the occurrence of the at least one cancellation event associated with the at least one preconfigured measurement gap.

Accordingly, embodiments herein disclose a UE for handling preconfigured gaps in an NR. The UE includes a memory, a processor, a communicator and a gap management controller. The gap management controller is configured to trigger an UL MAC CE for transmission of a request for performing at least one of a gap activation and a gap deactivation to a gNB and determine that the UL MAC CE requesting performing at least one of the gap activation and the gap deactivation is not transmitted to the gNB. The UE is configured with at least one pre-configured measurement gap by the gNB. The gap management controller is configured to determine an occurrence of at least one cancellation event associated with the at least one preconfigured measurement gap and cancel the request for performing at least one of the gap activation and the gap deactivation, in response to determining the occurrence of the at least one cancellation event associated with the at least one preconfigured measurement gap.

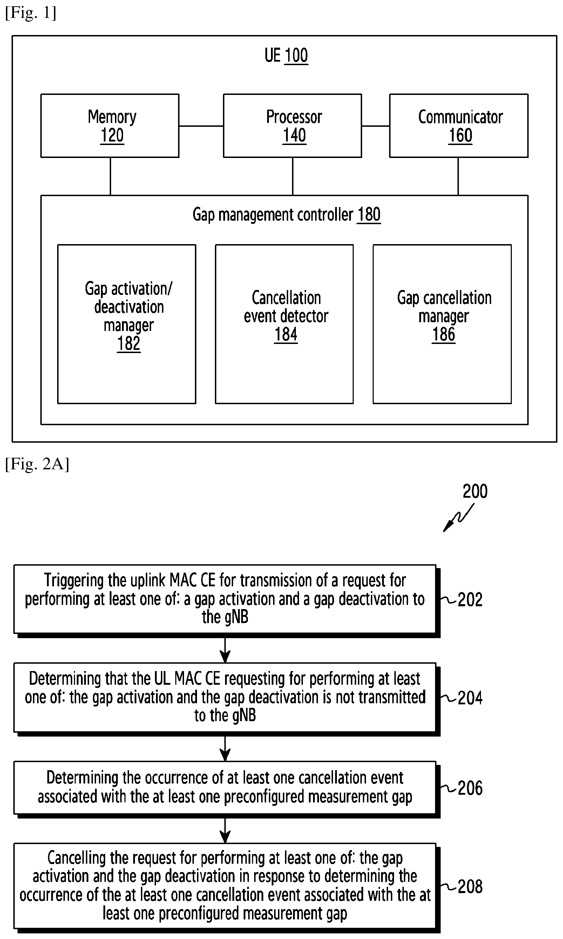

Referring to the drawings, and more particularly to FIGS. 1-7, where similar reference characters denote corresponding features consistently throughout the figures.

FIG. 1 is a block diagram of a UE for handling preconfigured gaps in NR, according to an embodiment;
Referring to FIG. 1, the UE 100 includes a memory 120, a processor 140, a communicator 160 and a gap management controller 180. The gap management controller 180 is implemented by processing circuitry such as logic gates, integrated circuits, microprocessors, microcontrollers, memory circuits, passive electronic components, active electronic components, optical components, or hardwired circuits, and may optionally be driven by firmware. The circuits may, for example, be embodied in one or more semiconductors.

The memory 120 is configured to store instructions to be executed by the processor 140. The memory 120 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 120 may be considered a non-transitory storage medium. The term "non-transitory" may indicate that the storage medium is not embodied in a carrier wave or a propagated signal. However, the term "non-transitory" should not be interpreted that the memory 120 is non-movable. In some examples, the memory 120 can be configured to store larger amounts of information. In some examples, a non-transitory storage medium may store data that can, over time, change (for example, in random access memory (RAM) or cache).

The processor 140 communicates with the memory 120, the communicator 160 and the gap management controller 180. The processor 140 is configured to execute instructions stored in the memory 120 and to perform various processes. The processor may include one or a plurality of processors, may be a general-purpose processor, such as a central processing unit (CPU) or an application processor (AP). The processor may be portioned to include a graphics-only processing unit such as a graphics processing unit (GPU), a visual processing unit (VPU), and/or an AI dedicated processor such as a neural processing unit (NPU).

The communicator 160 includes an electronic circuit specific to a standard that enables wired or wireless communication. The communicator 160 is configured to communicate internally between internal hardware components of the UE 100 and with external devices via one or more networks.

The gap management controller 180 includes a gap activation/deactivation manager 182, a cancellation event detector 184 and a gap cancellation manager 186.

The gap activation/deactivation manager 182 is configured to trigger an UL MAC CE for transmission of a request for performing a gap activation or a gap deactivation to a gNB 300. Here, the UE 100 is configured with a pre-configured measurement gap by the gNB 300 based on assistance information received by the gNB 300 from the UE 100 or any network function. Further, the gap activation/deactivation manager 182 is also configured to determine that the UL MAC CE triggered by the UE 100, requesting for performing the gap activation or the gap deactivation, is not transmitted to the gNB 300.

The gap activation/deactivation manager 182 is further configured to receive a new request from the upper layer for performing the gap activation or the gap deactivation and transmit a new request for performing the gap activation and the gap deactivation to the gNB 300 based on the new request from the upper layer. The gNB 300 then performs the gap activation or the gap deactivation based on the new request sent by the UE 100 in the form of the UL MAC CE which includes information associated with the pre-configured measurement gap to be one of activated and deactivated and sending to the UE 100 a DL MAC CE command from the gNB 300.

The gNB 300 receives a request from an LMF node 350 for performing the gap activation or the gap deactivation, and performs the gap activation or the gap deactivation based on the request from the LMF 350 node. The pre-configured measurement gap is for performing positioning measurements.

The cancellation event detector 184 is configured to determine an occurrence of a cancellation event associated with the preconfigured measurement gap. The cancellation event associated with the preconfigured measurement gap can be, for example, the UE 100 receiving a request from an upper layer to transmit a new request to the gNB 300 for a new preconfigured measurement gap configuration or a modified preconfigured measurement gap configuration. Here, the request from the upper layer is transmitted using the UL MAC CE. The cancellation event associated with the preconfigured measurement gap can be, for example, the UE 100 receiving an indication from the upper layer that the pre-configured measurement gap is not required and a pre-configured measurement gap with a new identity is required to be activated; the UE 100 determining a reset of a MAC entity is to be performed; or the UE 100 receiving a DL command from the gNB 300 for performing the gap activation and the gap deactivation.

The gap cancellation manager 186 is configured to receive an input from the cancellation event detector 184 that the occurrence of the cancellation event is detected and cancel the UL MAC CE triggered by the UE 100 requesting for performing the gap activation or the gap deactivation. During cancellation, the UE 100 may clear the UL MAC CE for the gap activation or deactivation, from a transmission buffer or retransmission buffer of the UE 100. If the UE 100 needs to send an SR for requesting resources for transmission of MAC CE, UE cancels (i.e., clears) the SR when it is not sent. If the SR is already sent and the resources are allocated to transmit the UL MAC CE, the UE 100 may skip using those resources. Similarly, if a random access is triggered for the SR transmission, such a random access process may be stopped, and the usage of any resource allocated to the UE 100 through random access may be skipped.

The gap activation/deactivation manager 182 is configured to receive a retransmission timer (for example, gapActivationRequestRestransmissionTimer) through RRC signalling from the gNB 300 and transmit the request for performing the gap activation or the gap deactivation to the gNB 300. Further, the gap activation/deactivation manager 182 is configured to determine a retransmission event and an expiry of the retransmission timer and retransmit the new request for performing the gap activation or the gap deactivation to the gNB 300. The retransmission event is, for example, a response for the new request sent by the UE 100 to the gNB 300 for performing the gap activation and the gap deactivation is not received by the UE 100 and determining a handover or a conditional handover of the UE 100.

The retransmission timer may be stopped when the UE 100 receives a confirmation from the gNB 300 that the UE 100 has received the UL MAC CE. In NR, this could done through a downlink control information (DCI) with a toggled new data indicator (NDI). If the upper layers request for a new transmission of the gap activation or the gap deactivation request with changed information (e.g., with a different identifier), then the retransmission timer is restarted.

At least one of the plurality of modules/components of the gap management controller 180 may be implemented through an AI model. A function associated with the AI model may be performed through memory 120 and the processor 140. The one or a plurality of processors controls the processing of the input data in accordance with a predefined operating rule or the AI model stored in the non-volatile memory and the volatile memory. The predefined operating rule or AI model is provided through training or learning.

Here, being provided through learning means that, by applying a learning process to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values and performs a layer operation through calculation of a previous layer and an operation of a plurality of weights. Examples of neural networks include, but are not limited to, a convolutional neural network (CNN), a deep neural network (DNN), a recurrent neural network (RNN), a restricted Boltzmann Machine (RBM), a deep belief network (DBN), a bidirectional recurrent deep neural network (BRDNN), generative adversarial networks (GAN), and deep Q-networks.

The learning process is a method for training a predetermined target device (for example, a robot) using a plurality of learning data to cause, allow, or control the target device to make a determination or prediction. Examples of learning processes include, but are not limited to, supervised learning, unsupervised learning, semi-supervised learning, or reinforcement learning.

Although the FIG. 1 shows various hardware components of the UE 100, it is to be understood that other embodiments are possible. In other embodiments, the UE 100 may include more or less components. Further, the labels or names of the components are used only for illustrative purpose and do not limit the scope. One or more components can be combined together to perform the same or a substantially similar function to that of the UE 100.

FIG. 2A is a flow chart illustrating a method for handling the preconfigured gaps in the NR by the UE 100, according to an embodiment.

Referring to the flowchart 200 of FIG. 2A, at step 202, the method includes the UE 100 triggering the UL MAC CE for transmission of the request for performing the gap activation or the gap deactivation to the gNB 300. For example, in the UE 100 described in FIG. 1, the gap management controller 180 is configured to trigger the UL MAC CE for transmission of the request for performing the gap activation or the gap deactivation to the gNB 300.

The UE 100 is be configured with the preconfigured measurement gap by the gNB 300 through the RRC signalling. The gNB 300 may configure preconfigured gaps based on assistance information from the UE 100 or network functions like the LMF 350. If the gap is a positioning gap, the gNB 300 may configure the gap based on the assistance information from the LMF 350. This assistance information from the LMF 350 to the gNB 300 for activating the gap can include information like the measurement gap length, gap repetition period and gap offset. For the preconfigured gaps the LMF 350 may also indicate an initial activation status of the gap.

Similarly, if the gap is a multi-SIM gap, then the UE 100 may provide assistance information for the configuration of preconfigured gaps, such as, a gap length, a gap duration, and/or a gap repetition factor. The UE 100 may also indicate that some of the gaps can be configured as preconfigured gaps and may prefer to activate or deactivate a gap through MAC signalling while some gaps may always be activated gaps.

Activation/deactivation of a preconfigured gap will now be described. When the UE 100 is configured with the preconfigured gap, the preconfigured gap may be dynamically activated/deactivated by the gNB 300. The gNB 300 may receive requests from the UE 100 or the network functions like the LMF 350 for the gap activation or the gap deactivation. The gaps may be activated through one of the following methods:
1. The UE 100 may send the UL MAC CE to request to the gNB 300 to activate or deactivate the preconfigured gap. The MAC CE can include information like the identifier of the gap to be activated or deactivated.
2. The gNB 300 may send the downlink MAC CE commanding the UE 100 to activate or deactivate the preconfigured gap. If the preconfigured gap is for positioning measurements, the LMF 350 may request the gNB 300 to activate or deactivate the gap, or the gaps may be activated or deactivated based on the request from the UE 100.
3. The UE 100 may send an RRC message to request activation or deactivation of the preconfigured gap. For example, RRC message LocationInformationIndication can be used for activating or deactivating the preconfigured gap. The LocationInformationIndication may include the identifier of the gap that needs to be activated or deactivated.
4. The gNB 300 may send an RRC message (e.g., an RRC reconfiguration message) to activate or deactivate the preconfigured gap.

The gNB 300 may send a predetermined condition for the gap activation or the gap deactivation in the RRC message. When the condition is satisfied, the preconfigured gap is automatically activated/deactivated. For example, on switching to a particular BWP, the preconfigured gap may be activated.

The UE 100 is configured by RRC signalling to determine whether it can send a request or send a specific type of request (for example, initiate the UL MAC CE) to activate or deactivate the preconfigured gap.

At step 204, the method includes the UE 100 determining that the UL MAC CE requesting for performing the gap activation or the gap deactivation is not transmitted to the gNB 300. For example, in the UE 100 described in the FIG. 1, the gap management controller 180 is configured to determine that the UL MAC CE requesting for performing the gap activation or the gap deactivation is not transmitted to the gNB 300.

At step 206, the method includes the UE 100 determining the occurrence of the cancellation event associated with the preconfigured measurement gap. For example, in the UE 100 described in the FIG. 1, the gap management controller 180 is configured to determine the occurrence of the cancellation event associated with the preconfigured measurement gap.

At step 208, the method includes the UE 100 cancelling the request for performing the gap activation or the gap deactivation, upon determining the cancellation event associated with the preconfigured measurement gap. For example, in the UE 100 described in the FIG. 1, the gap management controller 180 is configured to cancel the request for performing the gap activation or the gap deactivation, upon determining the cancellation event associated with the preconfigured measurement gap.

The various actions, acts, blocks, steps, or the like in the flow diagram 200 may be performed in the order presented, in a different order or simultaneously. Further, in some embodiments, some of the actions, acts, blocks, or steps may be omitted, added, modified, or skipped without departing from the scope of the embodiments disclosed herein.

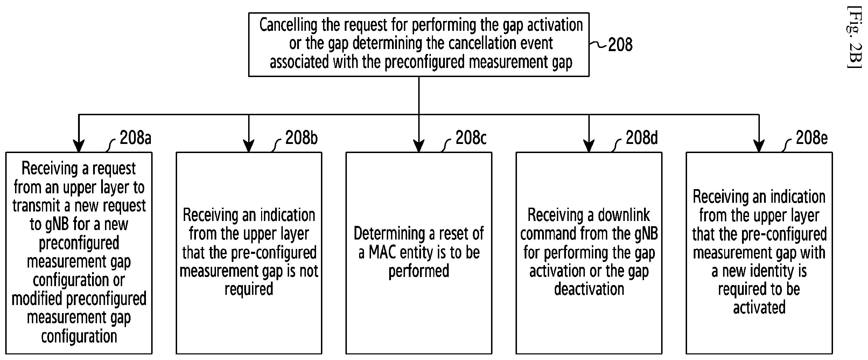

FIG. 2B is a flow chart illustrating a method for cancellation of the gap activation request, according to an embodiment.

The diagram shown in FIG. 2B expands upon step 208 of FIG. 2A. That is, step 208 of FIG. 2B may be equivalent to step 208 of FIG. 2A, and steps 208a-208e may provide additional details with respect to step 208.

Referring to the FIGS. 2B, at step 208, the method includes the UE 100 cancelling the request for performing the gap activation or the gap deactivation, upon determining the cancellation event associated with the preconfigured measurement gap. For example, in the UE 100 described in the FIG. 1, the gap management controller 180 is configured to cancel the request for performing the gap activation or the gap deactivation, upon determining the cancellation event associated with the preconfigured measurement gap. The cancelling of the request for performing the gap activation or the gap deactivation is performed by one of the methods provided in steps 208a to 208e.

At step 208a, the cancellation of the request for performing the gap activation or the gap deactivation is done by the UE 100 based on receiving the request from the upper layer to transmit the new request to the gNB 300 for the new preconfigured measurement gap configuration or the modified preconfigured measurement gap configuration.

At step 208b, the cancellation of the request for performing the gap activation or the gap deactivation is done by the UE 100 based on receiving the indication from the upper layer that the pre-configured measurement gap is not required and the pre-configured measurement gap with the new identity is required to be activated.

At step 208c, the cancellation of the request for performing the gap activation or the gap deactivation is done by the UE 100 based on determining the reset of the MAC entity.

At step 208d, the cancellation of the request for performing the gap activation or the gap deactivation is done by the UE 100 based on receiving the downlink command from the gNB 300 for performing the gap activation or the gap deactivation.

At step 208e, the cancellation of the request for performing the gap activation or the gap deactivation is done by the UE 100 based on receiving the indication from the upper layer that the pre-configured measurement gap with the new identity is required to be activated.

The cancellation event can be on occurrence of one or more of the following:
1. Receive a downlink command from the gNB 300 to activate or deactivate the gaps.
2. Receive a new measurement gap configuration from the network
3. Receive a request from upper layers to transmit a new request to the gNB 300 for a new/modified gap configuration.
4. Receive an indication from the upper layers that the gaps are not needed any more or the gap with a new identity needs to be activated.
5. On the MAC reset. The UE 100 may also deactivate the already activated preconfigured measurement gap after the MAC reset.

The various actions, acts, blocks, or steps, in the flow diagram of FIG. 2B may be performed in the order presented, in a different order or simultaneously. Further, in some embodiments, some of the actions, acts, blocks, or steps may be omitted, added, modified, or skipped without departing from the scope of the embodiments disclosed herein.

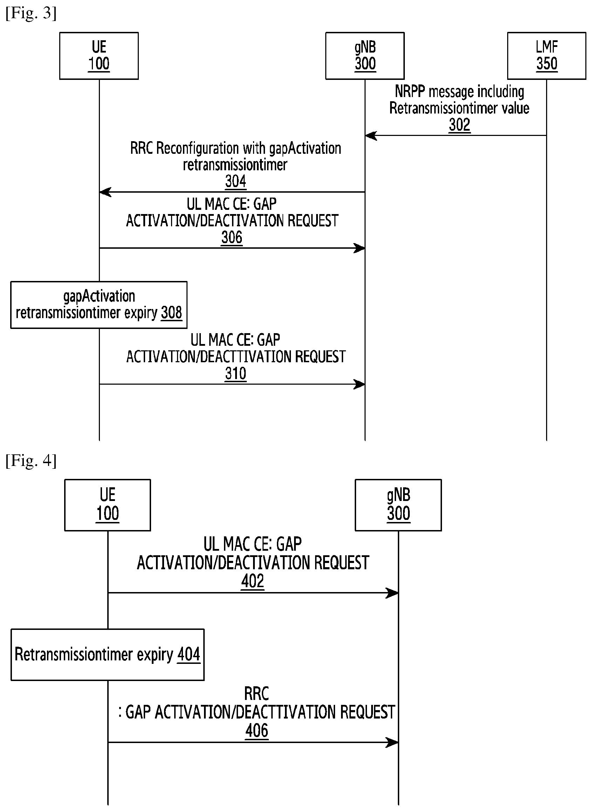

FIG. 3 is a signalling diagram illustrating a scenario of handling the expiry of the retransmission timer by the UE 100, according to an embodiment.

Referring to the FIG. 3, at step 302, the LMF 350 sends the NRPP message including a Retransmissiontimer value to the gNB 300.

At step 304, the gNB 300 sends the RRC Reconfiguration with a gapActivation retransmissiontimer to the UE 100.

At step 306, the UE 100 sends the UL MAC CE: GAP ACTIVATION/DEACTIVATION REQUEST to the gNB 300.

At step 308, the UE 100 detects the gapActivation retransmissiontimer expiry and at step 310, the UE 100 sends the UL MAC CE: GAP ACTIVATION/DEACTIVATION REQUEST to the gNB 300.

FIG. 4 is a signalling diagram illustrating a scenario of the gap activation based on the retransmission timer, according to an embodiment.

Referring to the FIG. 4, at step 402, the UE 100 sends the UL MAC CE: GAP ACTIVATION/DEACTIVATION REQUEST to the gNB 300.

At step 404, the UE 100 determines the Retransmissiontimer expiry, and at step 406, the UE 100 sends the RRC: GAP ACTIVATION/DEACTIVATION REQUEST to the gNB 300.

Retransmission of the activation/deactivation request will now be described. The UE 100 which sends the request for the gap activation or the gap deactivation, such as the UL MAC CE, may be configured with a retransmission timer-gapActivationRetransmisisonTimer by the gNB 300 through RRC signalling, such as RRC reconfiguration.

When the gap is used for positioning measurements, the LMF 350 may determine the gapActivationRetransmisisonTimervalue based on the latency requirements, gap schedule, and/or acceptable delay, and inform the gapActivationRetransmisisonTimervalue to the gNB 300 through NRPP signalling.

The retransmission timer (gapActivationRetransmisisonTimervalue) may be prespecified or may be preconfigured in the UE 100.

When configured with gapActivationRetransmisisonTimer, the UE 100 starts the timer on the transmission of the gap activation (or deactivation) request. On expiry of this retransmission timer, the UE 100 may retransmit the request for gap activation or deactivation.

The UE 100 may transmit the same request, for example, the UL MAC CE for activation or deactivation of the gap.

The UE 100 may request gap activation or deactivation using a different message. For example, on expiry of gapActivationRequestRetransmissionTimer after the transmission of UL MAC CE for activation or deactivation of the gap, the UE 100 may transmit an RRC message, such as LocationInformationIndication. LocationInformationIndication can include the gap identifier of the gap to be activated or deactivated. The timer for using a different message can be different.

For example, proposed 3GPP specification changes according to the above embodiment are provided below.

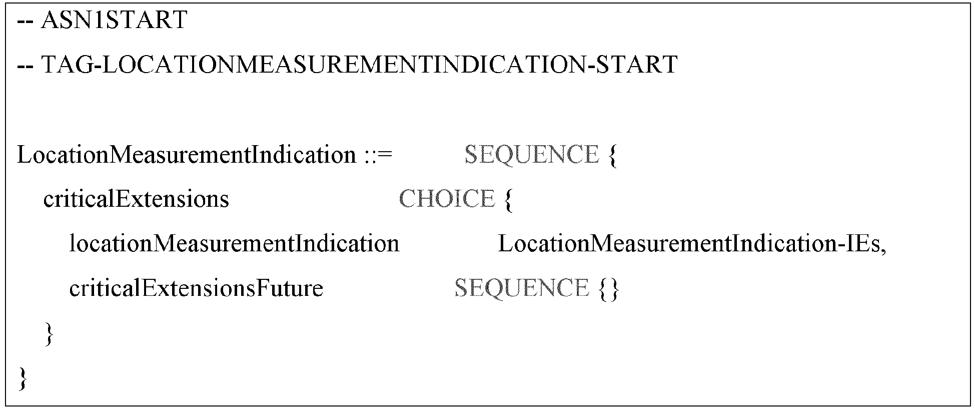

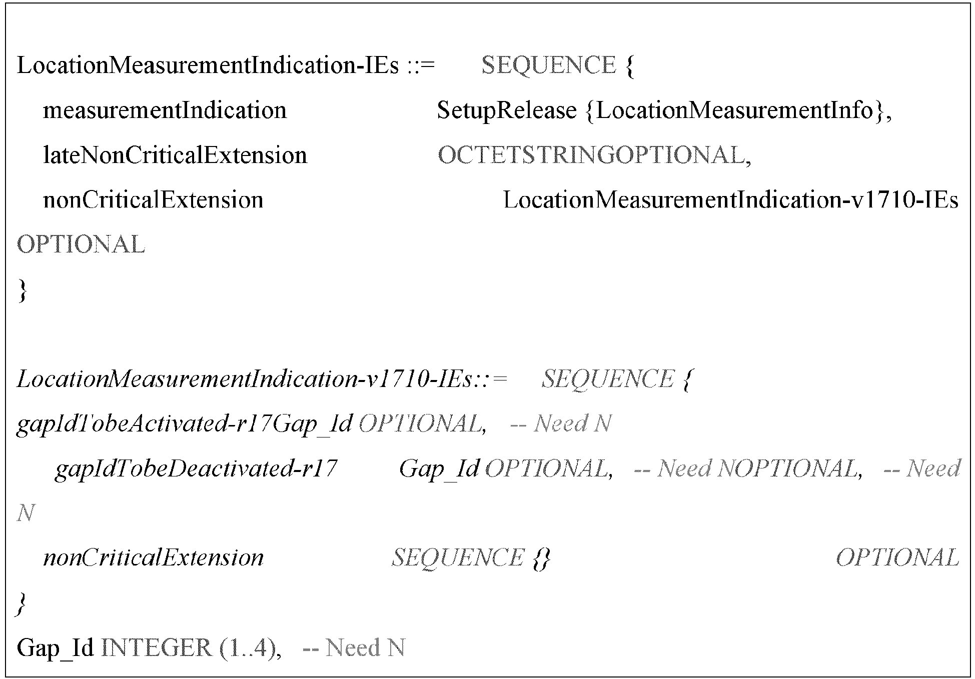

The UE 100 shall set the contents of LocationMeasurementIndication message as follows:
if the procedure is initiated to request for activation of a measurement gap: set the gapIdTobeActivated-r17 to the identifier of the measurement gap which needs to be activated,
and further, if the procedure is initiated to request for deactivation of a measurement gap: set the gapIdTobeDeactivated-r17 to the identifier of the measurement gap which needs to be deactivated.

The gapActivationRequestRestransmissionTimer is stopped when the UE 100 receives a command for gap activation/deactivation, such as DL MAC CE from gNB. It may be also stopped if the upper layers inform that the gap activation or deactivation initiated is not needed any more, or if the gNB configures the UE not to send a gap activation/deactivation request.

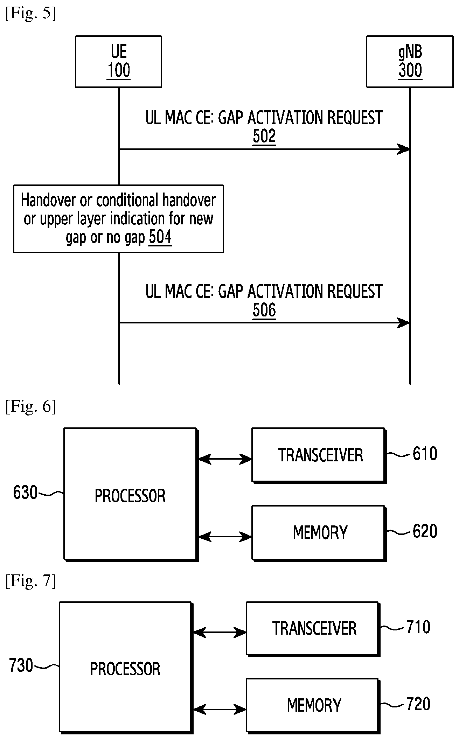

FIG. 5 is a signalling diagram illustrating a request for the gap activation by the UE upon determining a specific scenario, according to the embodiments as disclosed herein.

Referring to the FIG. 5, at step 502, the UE 100 sends a UL MAC CE GAP ACTIVATION REQUEST to the gNB 300. At step 504, the UE 100 determines the retransmission event, such as not receiving the response for the UL MAC CE GAP ACTIVATION REQUEST sent by the UE 100 to the gNB 300 for performing the gap activation or the gap deactivation and determining the handover or the conditional handover of the UE 100, determining the upper layer indication for new gap or no gap, etc.

At step 506, the UE 100, in response to determining the retransmission event, retransmits the UL MAC CE: GAP ACTIVATION REQUEST to the gNB 300 for performing the gap activation. Though FIG. 5 is described with respect to the gap activation scenario only, the same is applicable to the gap deactivation scenario.

Therefore, the UE 100 may retransmit (i.e. trigger or retrigger) the request for the gap activation or the gap deactivation after the handover or the conditional handover in case the UE 100 has does not receive a command for the activation of the gap or the deactivation of the gap from the gNB 300. Also, the retransmission is performed irrespective of the configuration or value of the retransmission timer. The request may be UL MAC CE for activation or deactivation of preconfigured gap.

The above-mentioned embodiment is captured in the NR MAC specification, for example, as below:

| |
|---|
| 1>If the upper layers request to activate or deactivate a measurement gap with an identifier and the measurement gap activation/deactivation request for this identifier is not triggered or when the gapActivationRequestRetransmissionTimer expires or when the UE has transmitted the gap activation/deactivation request and has not received a gap activation/deactivation command and a handover or a conditional handover has occurred, |
| 2>Trigger the gap activation Request with the required gap Id. |

Therefore, in the proposed method, when the upper layers request a new preconfigured gap or inform that preconfigured gap is not needed any more, a new gap activation or deactivation request may be retriggered by the UE 100. Also, an already activated preconfigured gap may be deactivated when the UE 100 detects some retransmission event such as the handover or the conditional handover. Therefore, in the proposed method, the UE 100 does not stay idle when any of the retransmission event occurs. Rather, the UE 100 will retransmit the new gap activation or deactivation request to the gNB 300.

FIG. 6 illustrates a block diagram illustrating a structure of a UE, according to an embodiment of. FIG. 6 may correspond to the example of the UE of FIG. 1.

As shown in FIG. 6, the UE includes a transceiver 610, a memory 620, and a processor 630. The transceiver 610, the memory 620, and the processor 630 of the UE may operate according to a communication method of the UE described above. However, the components of the UE are not limited thereto. For example, the UE may include more or fewer components than those described above. In addition, the processor 630, the transceiver 610, and the memory 620 may be implemented as a single chip. Also, the processor 630 may include at least one processor.

The transceiver 610 collectively refers to a UE receiver and a UE transmitter, and may transmit/receive a signal to/from a base station or a network entity. The signal transmitted or received to/from the base station or a network entity may include control information and data. The transceiver 610 may include an RF transmitter for up-converting and amplifying a frequency of a transmitted signal, and an RF receiver for amplifying low-noise and downconverting a frequency of a received signal. However, this is only an example of the transceiver 610 and components of the transceiver 610 are not limited to the RF transmitter and the RF receiver.

Also, the transceiver 610 may receive and output, to the processor 630, a signal through a wireless channel, and transmit a signal output from the processor 630 through the wireless channel.

The memory 620 may store a program and data required for operations of the UE. Also, the memory 620 may store control information or data included in a signal obtained by the UE. The memory 620 may be a storage medium, such as a read-only memory (ROM), a random access memory (RAM), a hard disk, a compact disc(CD)-ROM, and a digital versatile disc (DVD), or a combination of storage media.

The processor 630 may control a series of processes such that the UE operates as described above. For example, the transceiver 610 may receive a data signal including a control signal transmitted by the base station or the network entity, and the processor 630 may determine a result of receiving the control signal and the data signal transmitted by the base station or the network entity.

FIG. 7 illustrates a block diagram illustrating a structure of a base station, according to an embodiment.

As shown in FIG. 7, the base station includes a transceiver 710, a memory 720, and a processor 730. The transceiver 710, the memory 720, and the processor 730 of the base station may operate according to a communication method of the base station described above. However, the components of the base station are not limited thereto. For example, the base station may include more or fewer components than those described above. In addition, the processor 730, the transceiver 710, and the memory 720 may be implemented as a single chip. Also, the processor 730 may include at least one processor.

The transceiver 710 collectively refers to a base station receiver and a base station transmitter, and may transmit/receive a signal to/from a terminal or a base station. The signal transmitted or received to/from the terminal or a base station may include control information and data. The transceiver 710 may include an RF transmitter for up-converting and amplifying a frequency of a transmitted signal, and an RF receiver for amplifying low-noise and downconverting a frequency of a received signal. However, this is only an example of the transceiver 710 and components of the transceiver 710 are not limited to the RF transmitter and the RF receiver.

Also, the transceiver 710 may receive and output, to the processor 730, a signal through a wireless channel, and transmit a signal output from the processor 730 through the wireless channel.

The memory 720 may store a program and data required for operations of the base station. Also, the memory 720 may store control information or data included in a signal obtained by the base station. The memory 720 may be a storage medium, such as a ROM, a RAM, a hard disk, a CD-ROM, and a DVD, or a combination of storage media.

The processor 730 may control a series of processes such that the base station operates as described above. For example, the transceiver 710 may receive a data signal including a control signal transmitted by the terminal, and the processor 730 may determine a result of receiving the control signal and the data signal transmitted by the terminal.

A method performed by a UE in a wireless communication system is provided. The method includes receiving, from a base station, at least one measurement gap configuration; triggering a first UL MAC CE for requesting an activation or deactivation of a first measurement gap; identifying an event associated with the first measurement gap; cancelling the triggered first UL MAC CE based on the event; and triggering a second UL MAC CE for requesting an activation or deactivation of a second measurement gap.

The identifying of the event may include at least one of identifying that a MAC reset occurs; receiving, from an upper layer, a first indication indicating that the first UL MAC CE should be cancelled; or identifying that the first measurement gap is activated or deactivated based on a received DL MAC CE indicating an activation or deactivation of the first measurement gap.

The identifying of the event may include receiving, from an upper layer, a second indication indicating to stop a location measurement or to stop subframe and slot timing detection; and identifying that there is no activated measurement gap.

The method may further include transmitting, to the base station, a UE assistance information, wherein the at least one measurement gap configuration is received based on the UE assistance information.

The at least one measurement gap configuration may include at least one of an identifier of a measurement gap, information on a gap offset, information on a measurement gap length, information on a measurement gap repetition period, or information on a measurement gap timing advance.

The method may further include receiving, from the base station, a retransmission timer via RRC signalling; transmitting, to the base station, a third UL MAC CE for requesting one of an activation or a deactivation of a third measurement gap; identifying a retransmission event and an expiry of the retransmission timer; and retransmitting, to the base station, the third UL MAC CE.

The retransmission event may include determining a handover or a conditional handover of the UE.

A UE in a wireless communication system is provided. The UE includes at least one transceiver; and a controller coupled with the at least one transceiver, and configured to: receive, from a base station, at least one measurement gap configuration, trigger a first UL MAC CE for requesting an activation or deactivation of a first measurement gap, identify an event associated with the first measurement gap, cancel the triggered first UL MAC CE based on the event, and trigger a second UL MAC CE for requesting an activation or deactivation of a second measurement gap.

In order to identify the event, the controller may be configured to identify that a MAC reset occurs; receive, from an upper layer, a first indication indicating that the first UL MAC CE should be cancelled; or identify that the first measurement gap is activated or deactivated based on a received DL MAC CE indicating an activation or deactivation of the first measurement gap.

In order to identify the event, the controller may be further configured to receive, from an upper layer, a second indication indicating to stop a location measurement or to stop subframe and slot timing detection, and identify that there is no activated measurement gap.

The controller may be further configured to transmit, to the base station, UE assistance information, wherein the at least one measurement gap configuration is received based on the UE assistance information.

The at least one measurement gap configuration may include at least one of an identifier of a measurement gap, information on a gap offset, information on a measurement gap length, information on a measurement gap repetition period, or information on a measurement gap timing advance.

The controller may further be configured to receive, from the base station, a retransmission timer via RRC signalling; transmit, to the base station, a third UL MAC CE for requesting one of an activation or a deactivation of a third measurement gap; identify a retransmission event and an expiry of the retransmission timer; and retransmit, to the base station, the third UL MAC CE.

The retransmission event may include determining a handover or a conditional handover of the UE.

The present disclosure provides a method for handling preconfigured gaps in an NR user equipment UE. The method includes triggering, by the UE, an uplink MAC CE for transmission of a request for performing at least one of a gap activation and a gap deactivation to a gNB and determining, by the UE, that the UL MAC CE requesting for performing at least one of the gap activation and the gap deactivation is not transmitted to the gNB. The UE is configured with at least one pre-configured measurement gap by the gNB. The method includes determining, by the UE, an occurrence of at least one cancellation event associated with the at least one preconfigured measurement gap and cancelling, by the UE, the request for performing at least one of the gap activation and the gap deactivation, in response to determining the occurrence of the at least one cancellation event associated with the at least one preconfigured measurement gap.

In an embodiment, the at least one cancellation event associated with the at least one preconfigured measurement gap comprises one of receiving, by the UE, a request from at least one upper layer to transmit a new request to the gNB for at least one of a new preconfigured measurement gap configuration and a modified preconfigured measurement gap configuration, wherein the request from the at least one upper layer is transmitted using the UL MAC CE; or receiving, by the UE, an indication from the at least one upper layer that the at least one pre-configured measurement gap is not required and a pre-configured measurement gap with a new identity is required to be activated; or determining, by the UE, a reset of a MAC entity is to be performed; or receiving, by the UE, a downlink command from the gNB for performing at least one of the gap activation and the gap deactivation.

In an embodiment, the method includes receiving, by the UE, a new request from the at least one upper layer for performing at least one of the gap activation and the gap deactivation. When the preconfigured gap is a preconfigured positioning measurement gap, the upper layer could be an LPP layer. The LPP layer may request an RRC layer for activation or deactivation of a preconfigured positioning measurement gap. Further, the method also includes transmitting, by the UE, a new request for performing at least one of the gap activation and the gap deactivation to the gNB based on the new request from the at least one upper layer; and receiving, by the gNB, the new request for performing at least one of the gap activation and the gap deactivation from the UE.

In an embodiment, the method includes performing, by the gNB, at least one of the gap activation and the gap deactivation based on the new request, wherein the at least one of the gap activation and the gap deactivation is performed by one of sending, by the UE, the UL MAC CE to request to the gNB, wherein the UL MAC CE comprises information associated with the at least one pre-configured measurement gap to be one of activated and deactivated; and receiving, by the UE, a DL MAC CE command from the gNB.

In an embodiment, the method includes receiving, by the gNB, a request from an LMF node for performing at least one of the gap activation and the gap deactivation and performing, by the gNB, at least one of the gap activation and the gap deactivation based on the request from the LMF node. The at least one preconfigured measurement gap is for performing positioning measurements. Thus, the gNB can ask the UE to activate or deactivate the gaps without the UE requesting for the same or even while UE has triggered requests for activation or deactivation of the gaps, which could be in some cases, a different gap than the gNB activated.

In an embodiment, the method further includes receiving, by the UE, a retransmission timer through RRC signalling from the gNB and transmitting, by the UE, the request for performing at least one of the gap activation and the gap deactivation to the gNB. Further, the method includes determining, by the UE, at least one of a retransmission event and an expiry of the retransmission timer; and retransmitting, by the UE, the new request for performing at least one of the gap activation and the gap deactivation to the gNB.

In an embodiment, the retransmission event is at least one of a response for the new request sent by the UE to the gNB for performing the gap activation and the gap deactivation is not received by the UE and determining a handover or a conditional handover of the UE.

In an embodiment, the at least one pre-configured measurement gap is configured for the UE by the gNB based on assistance information from the UE and at least one network function.

Accordingly, embodiments herein disclose a UE for handling preconfigured gaps in an NR. The UE includes a memory, a processor, a communicator and a gap management controller. The gap management controller is configured to trigger a uplink MAC CE for transmission of a request for performing at least one of a gap activation and a gap deactivation to a gNB and determine that the UL MAC CE requesting for performing at least one of the gap activation and the gap deactivation is not transmitted to the gNB. The UE is configured with at least one preconfigured measurement gap by the gNB. The gap management controller is configured to determine an occurrence of at least one cancellation event associated with the at least one preconfigured measurement gap and cancel the request for performing at least one of the gap activation and the gap deactivation, in response to determining the occurrence of the at least one cancellation event associated with the at least one preconfigured measurement gap.

It is to be understood that the phraseology or terminology employed herein is for the purpose of description and not of limitation. Therefore, while the embodiments herein have been described in terms of what is disclosed, those skilled in the art will recognize that the embodiments herein can be practiced with modification within the scope of the embodiments as described herein as defined by the appended claims.

## Claims

1. A method performed by a user equipment, UE, in a wireless communication system, the method comprising:
receiving, from a base station, a radio resource control, RRC, message including first information configuring at least one measurement gap and second information indicating whether the UE is configured to transmit a request for activation or deactivation of a pre-configured measurement gap through an uplink, UL, medium access control, MAC, control element, CE;
triggering (202) a first request for activation or deactivation of a first pre-configured measurement gap through the UL MAC CE based on the first information and the second information;
identifying (206) an occurrence of at least one event associated with the first pre-configured measurement gap, wherein the at least one event comprises reception of a downlink, DL, command for activation or deactivation of the first pre-configured measurement gap from the base station;
cancelling (208) the triggered first request for the activation or deactivation of the first pre-configured measurement gap based on the occurrence of the at least one event; and
triggering (208a) a second request for activation or deactivation of a second pre-configured measurement gap.

2. The method of claim 1, wherein the occurrence of the at least one event further comprises:
identifying that a MAC reset occurs; or
receiving, from an upper layer, an indication indicating that the triggered first request is cancelled.

3. The method of claim 1, wherein the occurrence of the at least one event further comprises:
receiving, from an upper layer, an indication indicating to stop a location measurement to stop subframe and slot timing detection; and
identifying that there is no activated measurement gap.

4. The method of claim 1, further comprising:
transmitting, to the base station, UE assistance information,
wherein the first information is based on the UE assistance information.

5. The method of claim 1, wherein the first information includes at least one of a measurement gap identifier, ID, information on a gap offset, information on a measurement gap length, information on a measurement gap repetition period, or information on a measurement gap timing advance.

6. A user equipment, UE, in a wireless communication system, the UE comprising:
at least one transceiver;
at least one processor communicatively coupled to the at least one transceiver; and
at least one memory, communicatively coupled to the at least one processor, storing instructions executed by the at least one processor individually or in any combination to cause the UE to:
receive, from a base station, a radio resource control, RRC, message including first information configuring at least one measurement gap and second information indicating whether the UE is configured to transmit a request for activation or deactivation of a pre-configured measurement gap through an uplink, UL, medium access control, MAC, control element, CE,
trigger a first request for activation or deactivation of a first pre-configured measurement gap through the UL MAC CE based on the first information and the second information,
identify an occurrence of at least one event associated with the first pre-configured measurement gap, wherein the at least one event comprises reception of a downlink, DL, command for activation or deactivation of the first pre-configured measurement gap from the base station,
cancel the triggered first request for the activation or deactivation of the first pre-configured measurement gap based on the occurrence of the at least one event, and
trigger a second request for activation or deactivation of a second pre-configured measurement gap.

7. The UE of claim 6, wherein the occurrence of the at least one event further comprises:
identifying that a MAC reset occurs; or
receiving, from an upper layer, an indication indicating that the triggered first request is cancelled.

8. The UE of claim 6, wherein the occurrence of the at least one event further comprises:
receiving, from an upper layer, an indication indicating to stop a location measurement or to stop subframe and slot timing detection; and
identifying that there is no activated measurement gap.

9. The UE of claim 6, wherein the instructions further cause the UE to:
transmit, to the base station, UE assistance information,
wherein the first information is based on the UE assistance information.

10. The UE of claim 6, wherein the first information includes at least one of a measurement gap identifier, ID, information on a gap offset, information on a measurement gap length, information on a measurement gap repetition period, or information on a measurement gap timing advance.

## Patentansprüche

1. Verfahren, das von einem Benutzergerät, UE (user equipment), in einem drahtlosen Kommunikationssystem durchgeführt wird, wobei das Verfahren umfasst:
Empfangen, von einer Basisstation, einer Funkressourcensteuerungsnachricht, RRC (radio resource control), die erste Information, die mindestens eine Messlücke konfiguriert, und zweite Information, die angibt, ob das UE konfiguriert ist, eine Anforderung zur Aktivierung oder Deaktivierung einer vorkonfigurierten Messlücke durch ein Aufwärtsstrecken-, UL (uplink)-, Medienzugriffssteuerungs-, MAC (medium access control)-, Steuerelement, CE (control element), zu senden, umfasst;
Auslösen (202) einer ersten Anforderung zur Aktivierung oder Deaktivierung einer ersten vorkonfigurierten Messlücke durch das UL-MAC-Steuerelement basierend auf der ersten Information und der zweiten Information;
Identifizieren (206) eines Auftretens mindestens eines Ereignisses, das mit der ersten vorkonfigurierten Messlücke assoziiert ist, wobei das mindestens eine Ereignis einen Empfang eines Abwärtsstrecken-, DL (downlink)-, Befehls zur Aktivierung oder Deaktivierung der ersten vorkonfigurierten Messlücke von der Basisstation umfasst;
Abbrechen (208) der ausgelösten ersten Anforderung zur Aktivierung oder Deaktivierung der ersten vorkonfigurierten Messlücke basierend auf dem Auftreten des mindestens einen Ereignisses; und
Auslösen (208a) einer zweiten Anforderung zur Aktivierung oder Deaktivierung einer zweiten vorkonfigurierten Messlücke.

2. Verfahren nach Anspruch 1, wobei das Auftreten des mindestens einen Ereignisses ferner umfasst:
Identifizieren, dass ein MAC-Neustart auftritt; oder
Empfangen, von einer oberen Schicht, einer Angabe, die angibt, dass die ausgelöste erste Anforderung abgebrochen wird.

3. Verfahren nach Anspruch 1, wobei das Auftreten des mindestens einen Ereignisses ferner umfasst:
Empfangen, von einer oberen Schicht, einer Angabe, die angibt, eine Standortmessung zu stoppen oder eine Teilrahmen- und Slot-Timing-Erkennung zu stoppen; und
Identifizieren, dass es keine aktivierte Messlücke gibt.

4. Verfahren nach Anspruch 1, ferner umfassend:
Senden, an die Basisstation, von UE-Unterstützungsinformation,
wobei die erste Information auf der UE-Unterstützungsinformation basiert.

5. Verfahren nach Anspruch 1, wobei die erste Information mindestens eines von einem Messlückenidentifikator, ID (identifier), Information über einen Lückenversatz, Information über eine Messlückenlänge, Information über eine Messlückenwiederholungsperiode oder Information über einen Messlücken-Timing-Vorlauf umfasst.

6. Benutzergerät, UE (user equipment), in einem drahtlosen Kommunikationssystem, wobei das UE umfasst:
mindestens einen Sende-Empfänger;
mindestens einen Prozessor, der mit dem mindestens einen Sende-Empfänger kommunikativ gekoppelt ist; und
mindestens einen Speicher, der mit dem mindestens einen Prozessor kommunikativ gekoppelt ist und Anweisungen speichert, die von dem mindestens einen Prozessor einzeln oder in beliebiger Kombination ausgeführt werden, um das UE zu veranlassen:
von einer Basisstation eine Funkressourcensteuerungsnachricht, RRC (radio resource control), die erste Information, die mindestens eine Messlücke konfiguriert, und zweite Information, die angibt, ob das UE konfiguriert ist, eine Anforderung zur Aktivierung oder Deaktivierung einer vorkonfigurierten Messlücke durch ein Aufwärtsstrecken-, UL (uplink)-, Medienzugriffssteuerungs-, MAC (medium access control)-, Steuerelement, CE (control element), zu senden, umfasst, zu empfangen,
eine erste Anforderung zur Aktivierung oder Deaktivierung einer ersten vorkonfigurierten Messlücke durch das UL-MAC-Steuerelement basierend auf der ersten Information und der zweiten Information auszulösen,
ein Auftreten mindestens eines Ereignisses, das mit der ersten vorkonfigurierten Messlücke assoziiert ist, zu identifizieren, wobei das mindestens eine Ereignis einen Empfang eines Abwärtsstrecken-, DL (downlink)-, Befehls zur Aktivierung oder Deaktivierung der ersten vorkonfigurierten Messlücke von der Basisstation umfasst,
die ausgelöste erste Anforderung zur Aktivierung oder Deaktivierung der ersten vorkonfigurierten Messlücke basierend auf dem Auftreten des mindestens einen Ereignisses abzubrechen, und
eine zweite Anforderung zur Aktivierung oder Deaktivierung einer zweiten vorkonfigurierten Messlücke auszulösen.

7. UE nach Anspruch 6, wobei das Auftreten des mindestens einen Ereignisses ferner umfasst:
Identifizieren, dass ein MAC-Neustart auftritt; oder
Empfangen, von einer oberen Schicht, einer Angabe, die angibt, dass die ausgelöste erste Anforderung abgebrochen wird.

8. UE nach Anspruch 6, wobei das Auftreten des mindestens einen Ereignisses ferner umfasst:
Empfangen, von einer oberen Schicht, einer Angabe, die angibt, eine Standortmessung zu stoppen oder eine Teilrahmen- und Slot-Timing-Erkennung zu stoppen; und
Identifizieren, dass es keine aktivierte Messlücke gibt.

9. UE nach Anspruch 6, wobei die Anweisungen ferner das UE veranlassen:
an die Basisstation UE-Unterstützungsinformation zu senden,
wobei die erste Information auf der UE-Unterstützungsinformation basiert.

10. UE nach Anspruch 6, wobei die erste Information mindestens eines von einem Messlückenidentifikator, ID (identifier), Information über einen Lückenversatz, Information über eine Messlückenlänge, Information über eine Messlückenwiederholungsperiode oder Information über einen Messlücken-Timing-Vorlauf umfasst.

## Revendications

1. Procédé mis en œuvre par un équipement utilisateur, UE, dans un système de communication sans fil, le procédé comprenant :
la réception, en provenance d'une station de base, d'un message de contrôle des ressources radio, RRC (radio resource control), incluant des premières informations configurant au moins un intervalle de mesure et des secondes informations indiquant si l'équipement utilisateur est configuré pour transmettre une requête d'activation ou de désactivation d'un intervalle de mesure préconfiguré par l'intermédiaire d'un élément de contrôle, CE (control element), de contrôle d'accès au support, MAC (medium access control), de liaison montante, UL (uplink) ;
le déclenchement (202) d'une première requête d'activation ou de désactivation d'un premier intervalle de mesure préconfiguré par l'intermédiaire du CE MAC UL sur la base des premières informations et des secondes informations ;
l'identification (206) d'une occurrence d'au moins un événement associé au premier intervalle de mesure préconfiguré, dans lequel l'au moins un événement comprend la réception d'une commande de liaison descendante, DL (downlink), d'activation ou de désactivation du premier intervalle de mesure préconfiguré en provenance de la station de base ;
l'annulation (208) de la première requête déclenchée pour l'activation ou la désactivation du premier intervalle de mesure préconfiguré sur la base de l'occurrence de l'au moins un événement ; et
le déclenchement (208a) d'une seconde requête d'activation ou de désactivation d'un second intervalle de mesure préconfiguré.

2. Procédé selon la revendication 1, dans lequel l'occurrence de l'au moins un événement comprend en outre :
l'identification qu'une réinitialisation MAC se produit ; ou
la réception, en provenance d'une couche supérieure, d'une indication indiquant que la première requête déclenchée est annulée.

3. Procédé selon la revendication 1, dans lequel l'occurrence de l'au moins un événement comprend en outre :
la réception, en provenance d'une couche supérieure, d'une indication indiquant d'arrêter une mesure de localisation ou d'arrêter une détection de synchronisation de sous-trame et d'intervalle de temps ; et
l'identification qu'il n'y a pas d'intervalle de mesure activé.

4. Procédé selon la revendication 1, comprenant en outre :
la transmission, à la station de base, d'informations d'assistance de l'équipement utilisateur,
dans lequel les premières informations sont basées sur les informations d'assistance de l'équipement utilisateur.

5. Procédé selon la revendication 1, dans lequel les premières informations incluent au moins l'un parmi un identifiant d'intervalle de mesure, ID (identifier), des informations sur un décalage d'intervalle, des informations sur une durée d'intervalle de mesure, des informations sur une période de répétition d'intervalle de mesure, ou des informations sur une avance de synchronisation d'intervalle de mesure.

6. Équipement utilisateur, UE, dans un système de communication sans fil, l'équipement utilisateur comprenant :
au moins un émetteur-récepteur ;
au moins un processeur qui est couplé en communication à l'au moins un émetteur-récepteur ; et
au moins une mémoire, qui est couplée en communication à l'au moins un processeur, stockant des instructions exécutées par l'au moins un processeur individuellement ou en toute combinaison pour amener l'équipement utilisateur à :
recevoir, en provenance d'une station de base, un message de contrôle des ressources radio, RRC, incluant des premières informations configurant au moins un intervalle de mesure et des secondes informations indiquant si l'équipement utilisateur est configuré pour transmettre une requête d'activation ou de désactivation d'un intervalle de mesure préconfiguré par l'intermédiaire d'un élément de contrôle, CE, de contrôle d'accès au support, MAC, de liaison montante, UL,
déclencher une première requête d'activation ou de désactivation d'un premier intervalle de mesure préconfiguré par l'intermédiaire du CE MAC UL sur la base des premières informations et des secondes informations,
identifier une occurrence d'au moins un événement associé au premier intervalle de mesure préconfiguré, dans lequel l'au moins un événement comprend la réception d'une commande de liaison descendante, DL, d'activation ou de désactivation du premier intervalle de mesure préconfiguré en provenance de la station de base,
annuler la première requête déclenchée pour l'activation ou la désactivation du premier intervalle de mesure préconfiguré sur la base de l'occurrence de l'au moins un événement, et
déclencher une seconde requête d'activation ou de désactivation d'un second intervalle de mesure préconfiguré.

7. Équipement utilisateur selon la revendication 6, dans lequel l'occurrence de l'au moins un événement comprend en outre :
l'identification qu'une réinitialisation MAC se produit ; ou
la réception, en provenance d'une couche supérieure, d'une indication indiquant que la première requête déclenchée est annulée.

8. Équipement utilisateur selon la revendication 6, dans lequel l'occurrence de l'au moins un événement comprend en outre :
la réception, en provenance d'une couche supérieure, d'une indication indiquant d'arrêter une mesure de localisation ou d'arrêter une détection de synchronisation de sous-trame et d'intervalle de temps ; et
l'identification qu'il n'y a pas d'intervalle de mesure activé.

9. Équipement utilisateur selon la revendication 6, dans lequel les instructions amènent en outre l'équipement utilisateur à :
transmettre, à la station de base, des informations d'assistance de l'équipement utilisateur,
dans lequel les premières informations sont basées sur les informations d'assistance de l'équipement utilisateur.

10. Équipement utilisateur selon la revendication 6, dans lequel les premières informations incluent au moins l'un parmi un identifiant d'intervalle de mesure, ID, des informations sur un décalage d'intervalle, des informations sur une durée d'intervalle de mesure, des informations sur une période de répétition d'intervalle de mesure, ou des informations sur une avance de synchronisation d'intervalle de mesure.
